# EUROPEAN PATENT SPECIFICATION

(11) **EP 1 896 237 B1**
(45) Date of publication and mention of the grant of the patent: **21.10.2009**
(21) Application number: 05775155.4
(22) Date of filing: 18.08.2005
(51) Int. Cl.: B29B 17/00

(54) **METHOD FOR MANUFACTURING A BUILDING COMPONENT OF RECYCLED MATERIAL**
VERFAHREN ZUR HERSTELLUNG EINES BAUTEILS AUS RECYCELTEM MATERIAL
PROCEDE POUR FABRIQUER UN COMPOSANT DE CONSTRUCTION ISSU DE MATERIAUX RECYCLES

(30) Priority: 04.04.2005 NL 1028682
(43) Date of publication of application: 12.03.2008
(73) Proprietor: Albrecht-Huijsmans, Antonia Maria, 5175 TB Loon op Zand (NL)
(72) Inventor: ALBRECHT, Karl, deceased (NL)
(74) Representative: Dekker-Garms, Alwine Emilie
(86) International application number: PCT/NL2005/000599
(87) International publication number: WO 2006/107190

(56) References cited:
- DE-A1- 10 124 668
- DE-A1- 10 330 756
- GB-A- 2 404 197
- US-A- 5 106 554
- US-A- 5 316 708
- US-A1- 2003 155 677
- US-A1- 2005 035 484

## Description

The present invention relates to a method for manufacturing a building component.

In particular, the building component is a combination of new and used material, which is applicable in practically all sectors of the construction industry. It has practically no limitations, either in the case of building of new houses or in the case of renovating houses.

We are all aware of the fact that our resources are slowly but surely running out, and that the mountain of waste is getting bigger and bigger. On the basis of this fact, the idea has been conceived to solve this luxury problem by reusing this mountain, in other words, by recycling.

At this moment, there is hardly any place in the world where waste is being reused. This is only done in the form of incineration. However, waste should be recycled more, and in a more useful way. The present invention provides a solution by reusing waste as a filler, and by forming compounds on the basis of waste while adding fire-resistant and/or fire-retardant substances, as a result of which a new and practically indestructible product is obtained.

The recycled product is made in a certain shape, as a result of which a building system is obtained, wherein the pre-shaped components may be assembled in a fast and easy way. During assembly, these components are interconnected by means of screws, and in this way, a solid connection is obtained, which brings with it higher stability than in the case of traditional building processes. Therefore, it is applicable to say that a safer way of building is obtained.

Consequently, houses having the building components according to the present invention are hurricane proof, typhoon proof, earthquake proof and tsunami proof, because such houses remain intact and do not collapse, contrary to traditionally built houses. In this respect, one can think of the many earthquake regions which are present on this earth at the location of fault lines, the yearly hurricanes and typhoons, both in America and Asia, the many lives, but also the emotional and financial damage that is involved.

The revolutionary system of the building components according to the present invention is not tied to a traditional way of building, nor to a certain styling. Every type of house and every type of finishing may be realized by means of this system. As far as the traditional way of building is concerned, the usual materials, such as roof beams, roof trusses and the like can be replaced by this system, wherein the environment and nature are saved (there is no need for fossil or other resources) and safety is guaranteed. It is important to note that in case the building components according to the present invention will be applied in traditional house-building, the spectre of the well-known woodworm and/or longicorn belongs to the past.

Recycled roof beams, floor beams and ridge beams can be processed and anchored in a traditional way.

The building components according to the present invention are indestructible, durable and strong. The present invention also has positive consequences in respect of weight: the total weight of a house that has been built by using the building components according to the present invention will be approximately a third of the weight of a house that has been built in a traditional way. An additional advantage is that it is sufficient to apply less heavy foundations. This is another way of preventing an unnecessary use of resources. Each part may be manufactured from the same materials, whether it is about-walls, beams, roof trusses, window frames, or doors; everything is possible. The material is insusceptible to elongation and shrinkage, it does not discolour, and it is not apt to get dirty.

The strength of the system having the building components according to the present invention resides in the combination of material and construction, because the parts are anchored with respect to each other, and, as a consequence, are forming a solid entirety.

As far as the costs of the system are concerned, it may be stated that these will be considerably lower as a result of the very fast handling and the lower personnel costs. Example: building a normal, common detached house according to the system having the building components according to the present invention will take approximately 8 to 10 weeks, with the exception of digging out and casting the foundation. As a result of the lower weight, it is not necessary to use heavy cranes, which also implies considerable savings in costs.

The system having the building components according to the present invention may be denoted as being watertight, insusceptible to differences in temperature (there are no thermal bridges) and very safe. As a result of the high speed at which building processes may be performed, the system is pre-eminently suitable for application in disaster areas, while it offers the security of being safe in case of recurrence of a natural disaster at the same time.

For example, in the case of a tsunami, less damage will be done, and there will be fewer casualties. Furthermore, the reconstruction will be faster, and will cost less time and money.

It is noted that the application of waste for making useful structures and products is known. For example, US 5, 106, 554 discloses a barrier which is manufactured by using a mould and a cage frame which is inserted into the mould. By putting the cage frame in place in the mould, a clearance gap between the frame side walls and the mold side walls is formed. The cage frame is first substantially filled with vehicle tire material and secondly filled with non-recyclable plastic material. An adhesive-type liquid is poured into the clearance gap to fill the sides of the mold. The top of the mold is coupled into place and the adhesive liquid is poured through the top to fill up the mould. The mould is then cured to produce the barrier.

DE 101 24 668 A1 discloses a manufacturing process for construction elements, wherein used car tires are cut and stretched to form straight rails, connected, and filled with granulated tire waste material.

US 2005/0035484 A1 discloses a method of making composite mixture materials, which includes heating components of the material in an inert gas environmentally friendly manner. The materials as mentioned are made of recycled plastic, glass and rubber, and optionally, other components. Methods of using the composite mixture materials include making panels, walls and blocks.

In the following, a point-by-point enumeration of the many advantages of the system having the building components according to the present invention will be given.
- very strong connection by special linking system
- No need for new resources such as wood, stone, sand and concrete
- Environment-friendly by reusing existing mountain of waste
- Practically indestructible, no corrosion, rust or decay, acid-resistant
- Durable
- Fire-resistant to fireproof, to a large extent
- Impact-resistant
- Insusceptible to differences in temperature
- High insulating value (no thermal bridges)
- Lower personnel costs
- Lower costs of logistics and transportation
- No decay (aboveground as well as underground)
- Fast building processes (8 to 10 weeks)
- Mutual connections of all building components, because of this, a solid connection is obtained (for example, by this connection, roof construction, outside wall and foundation are forming a single entirety)
- Anchoring at the foundation by means of bolts
- Lower weight (approximately a third of traditional building)
- Lighter foundation
- Not tied to type or design
- Higher supporting power (relevant in areas where excessive snowfall occurs)
- Higher tensile force and compressive force (as a result of interior fortification)
- No need for special tools
- May also be processed in a traditional way
- Applicable in traditional building, in building of new houses and renovating houses
- Not apt to get dirty
- Residual materials may be reused
- Hurricane proof
- Typhoon proof
- Earthquake proof (in case the ground underneath the house is partially washed away, as a result of which the house gets tilted, it is possible to place the house on another foundation again, in an easy way, by using a crane)
- Tsunami proof (because it is not possible for cracking or breaking to occur, higher security is obtained)
- Moisture-repellent (the material is moisture-repellent, and, as a consequence, water proof. This system is energy-saving because of the cavity insulation)
- Simple connection to existing buildings (instead of portocabins)

In the following, the manufacturing process of the building components according to the present invention will be explained in more detail.

The manufacturing process comprises an external sub-manufacture and an internal manufacture. The external sub-manufacture takes place at companies which are specialized in recycling plastics, which are supplying the hard core of the building components. The internal manufacture comprises the supply of polyester resin, or the supply of epoxy resin and quartz powder. Epoxy is preferred, because it is subject to less shrinkage during the manufacturing process. If so desired, one or more other materials may be added, for example glass fibre, brick grit and/or cement grit. In case brick'grit and/or cement grit is applied, a building component of which the appearance resembles the appearance of a conventional brick may be realized. Apart from that, the building component may be realized with every desired appearance.

Outer finishing may be realized by direct glueing or putting up a half-brick wall. In case of finishing in wood structure, it is possible to incorporate the structure.as well as the colour during the production. Colouring is carried out by adding natural pigments. As a consequence, the building components according to the present invention are not subject to discolouring or fading.

The method of producing systems having the building components according to the present invention comprises the following steps:
1. The supplied waste such as worn-out car tires, plastics, obsolete garden furniture, litter, packing material, polyester waste, etc. is first pulped or shredded, subsequently mixed with polyester resin or epoxy resin, and thereafter poured in a sleeve of set plate material. During the filling process, a hardening agent is added.
2. The hard core is obtained by pressing at high pressure. However, this handling process is more expensive. In the process, the material that is applied for forming the core may be heated, but this is not necessary.
3. In order to obtain the final product, the cured core is positioned in a closed vacuum mould, which is subsequently filled with polyester resin or epoxy resin with quartz powder, through a vacuum process. A fortification material in the form of set plate material is also arranged in this mould.

After curing has taken place, the final product may be stored outside, without any problems. After all, the building components are not apt to get dirty and resistant against all weather influences.

The system having the building components according to the present invention offers the possibility to produce the following items:
- garden fencing
- garden poles, pickets, roof trusses, ridge beams, battens, floor beams, intermediate beams, panelling, supporting walls, intermediate walls, roof tiles (these are directly screwed to the roof batten, as a result of which there is no interspace for birds and vermin), windows and doorposts, garden furniture; every shape can be made
- kitchens, furniture (conventionally, these products are manufactured from furniture chipboard. Due to this, trees are processed into shreds and mixed with glue)
- fortification components for dikes, sheetpilings of ditches, channels, harbours, and the like.

The present invention is illustrated in the attached figures. In the following, it is briefly indicated what is shown, per figure.

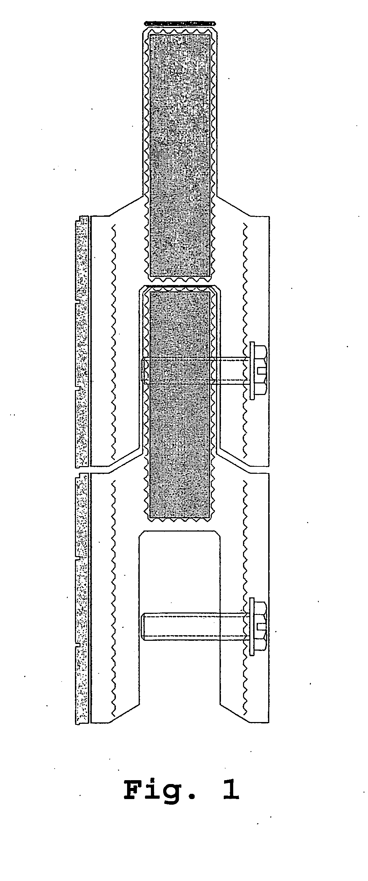

- Figure 1 shows two linked building components according to the present invention, having a brick motif;

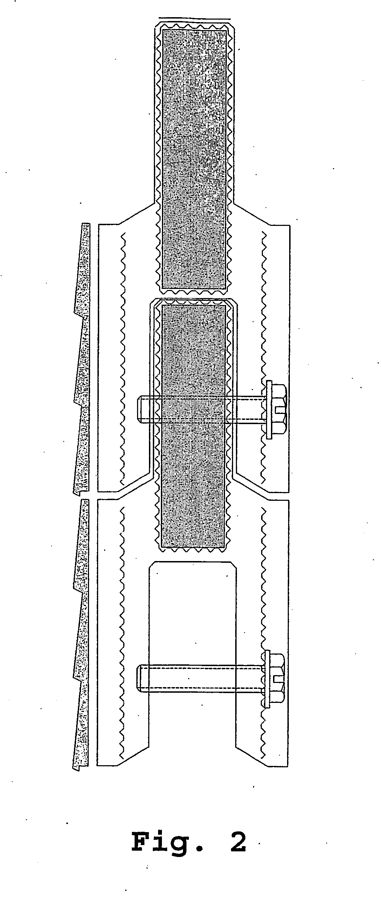

- figure 2 shows two linked building components according to the present invention, having a wood motif;

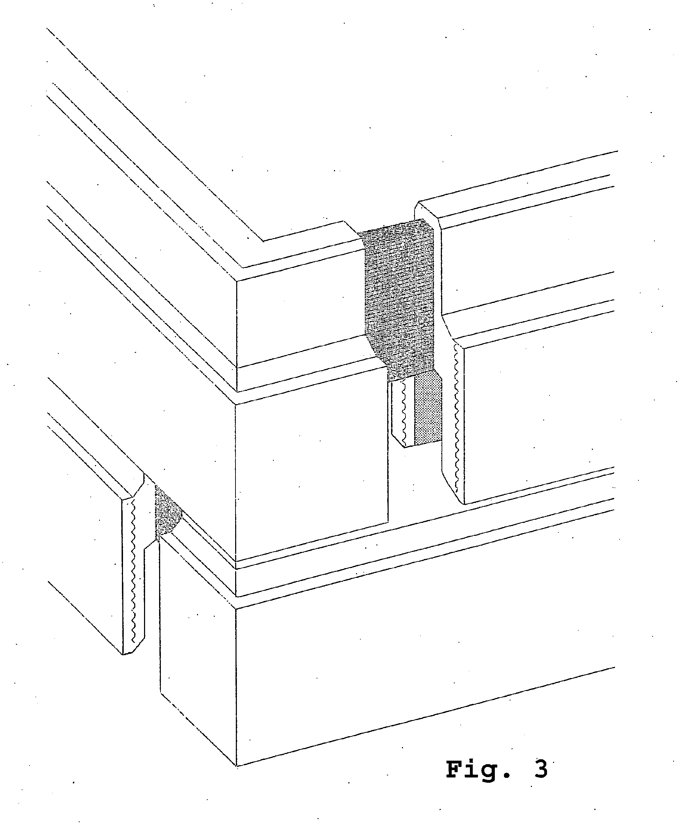

- figure 3 serves as an illustration of the linking system near a corner;

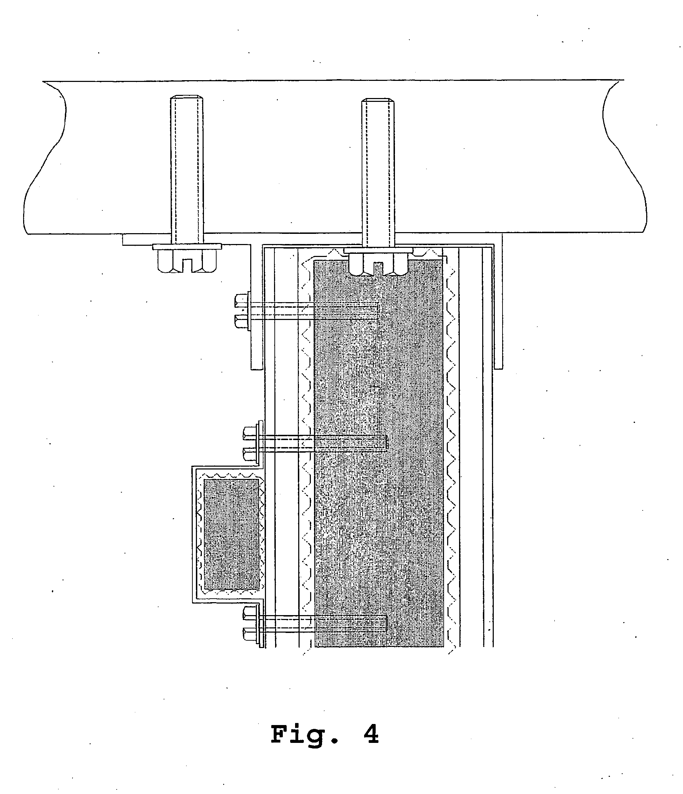

- figure 4 shows the connection of a building component according to the present invention to an existing wall;

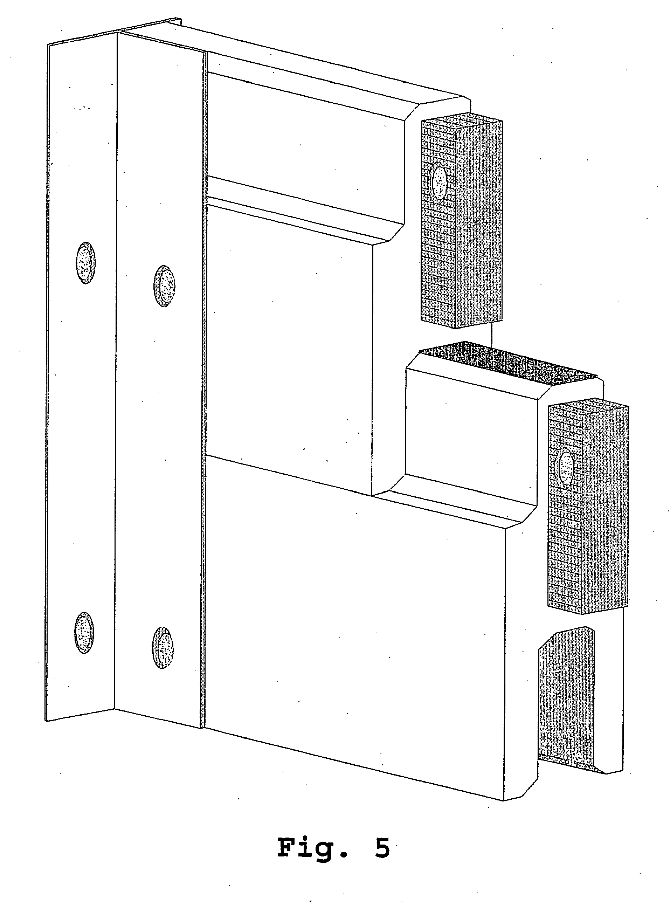

- figure 5 shows a connection unit against an existing building;

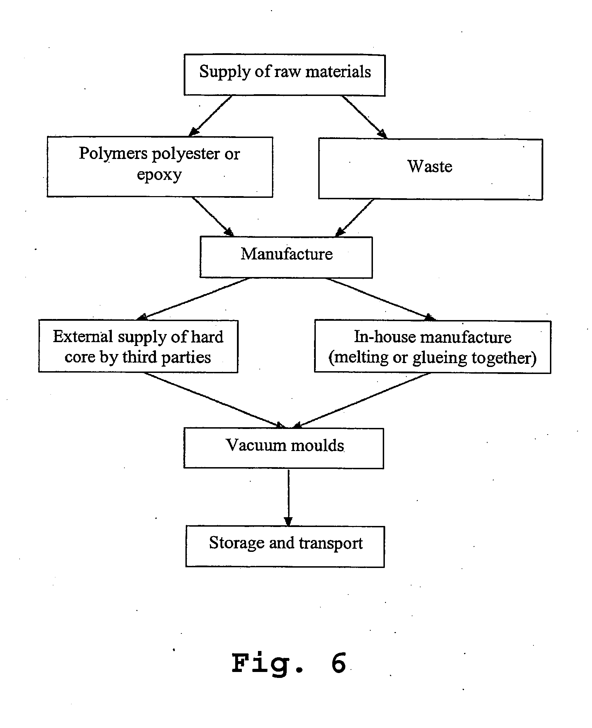

- figure 6 is a block diagram of the manufacturing process of the system having the building components according to the present invention;

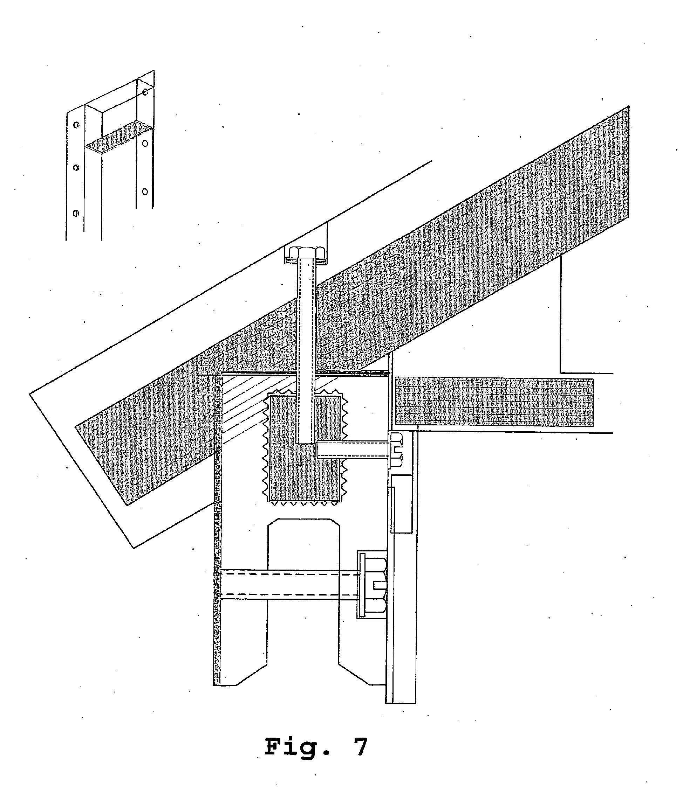

- figure 7 shows a roof truss attachment;

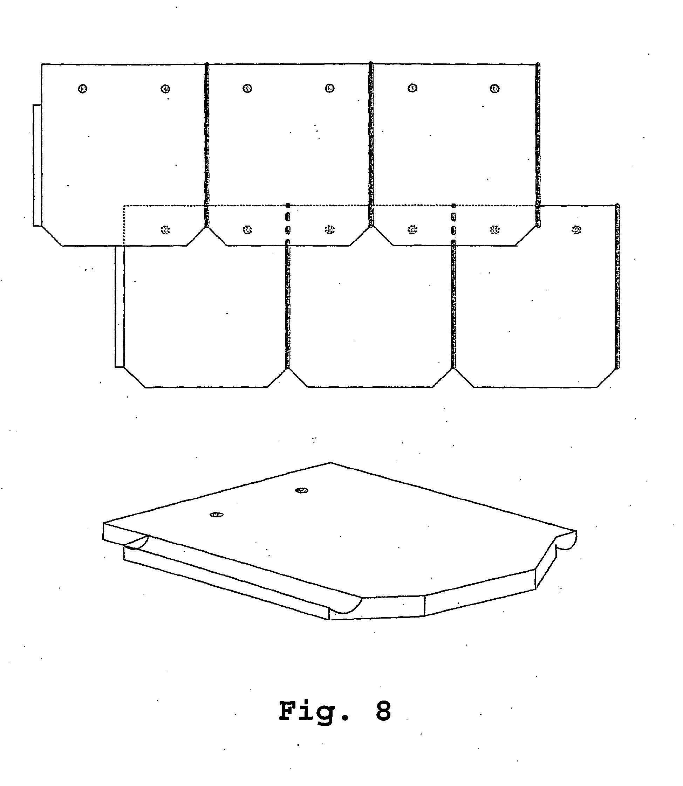

- figure 8 shows roof covering;

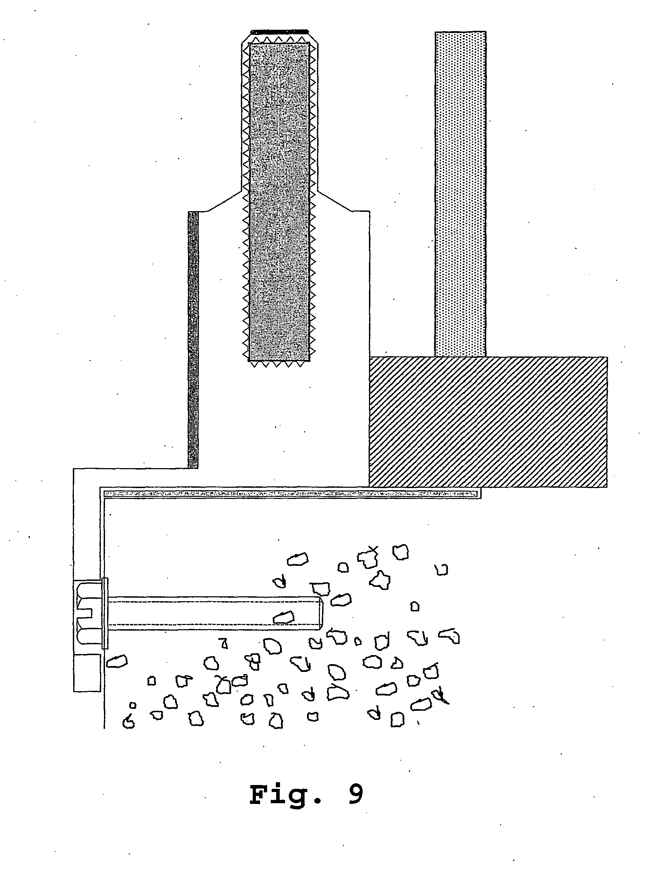

- figure 9 shows a ground sill;

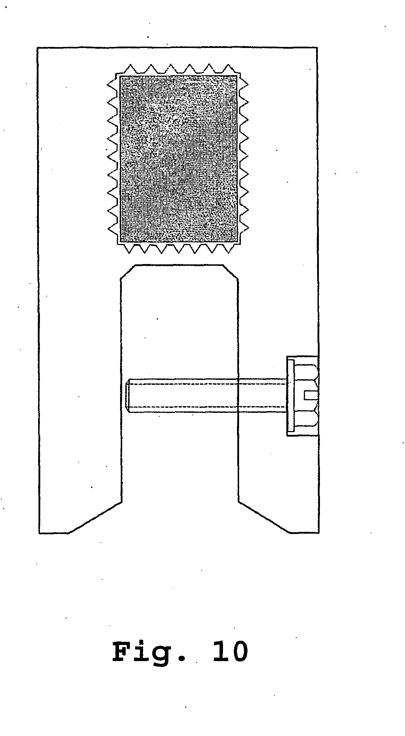

- figure 10 shows a top beam;

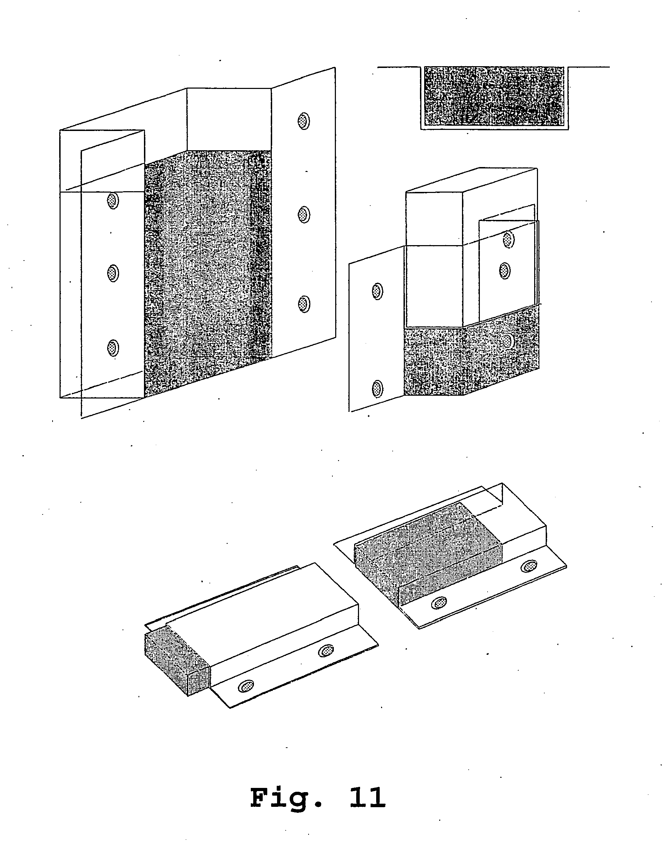

- figure 11 diagrammatically shows the coupling between a roof truss and a batten;

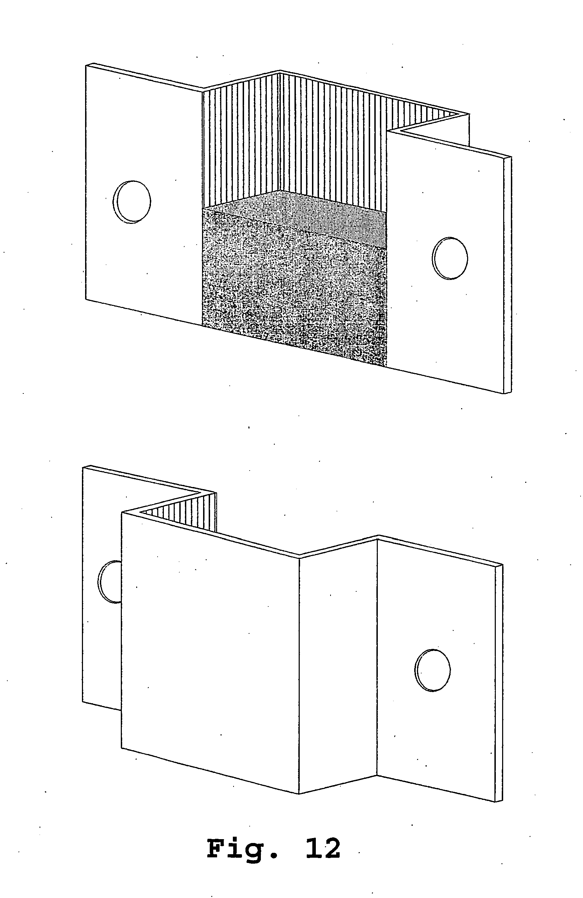

- figure 12 shows a coupling piece of the batten;

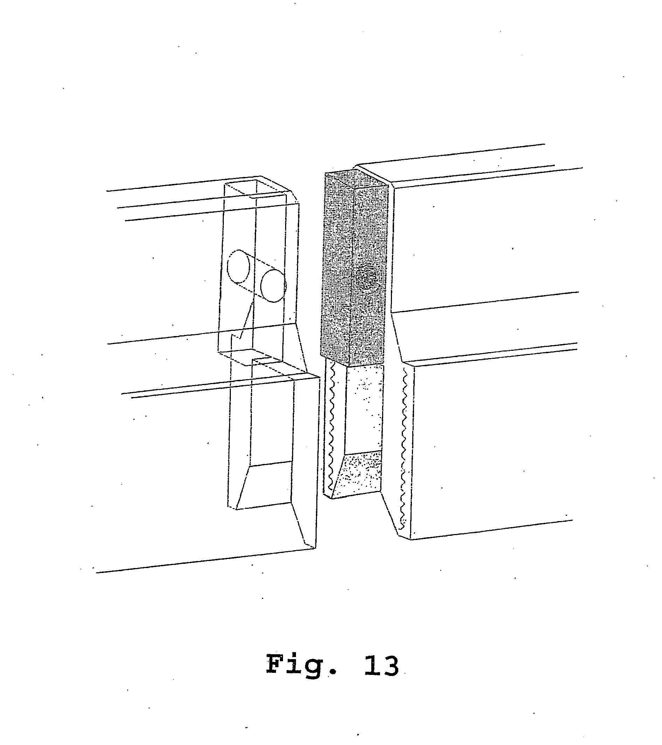

- figure 13 shows a possibility of a mutual coupling of the building components according to the present invention;

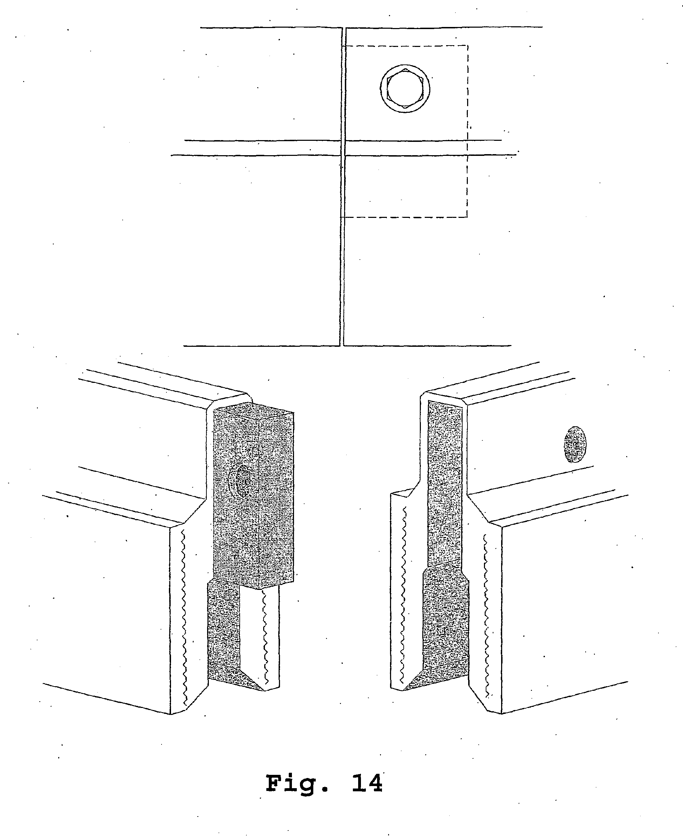

- figure 14 also shows a possibility of a mutual coupling of the building components according to the present invention;

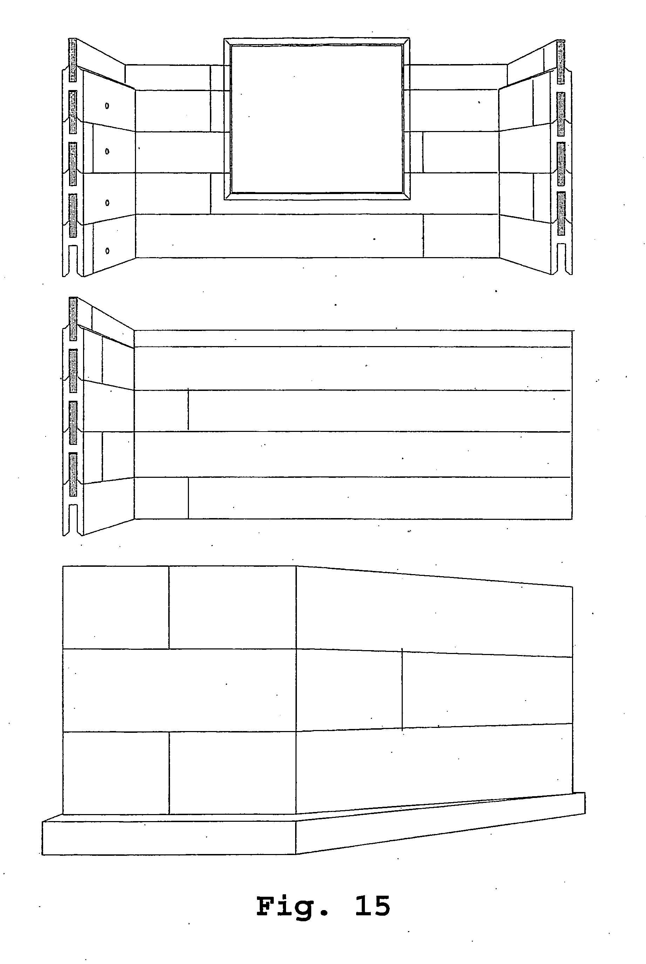

- figure 15 shows a number of walls such as built from building components according to the present invention;

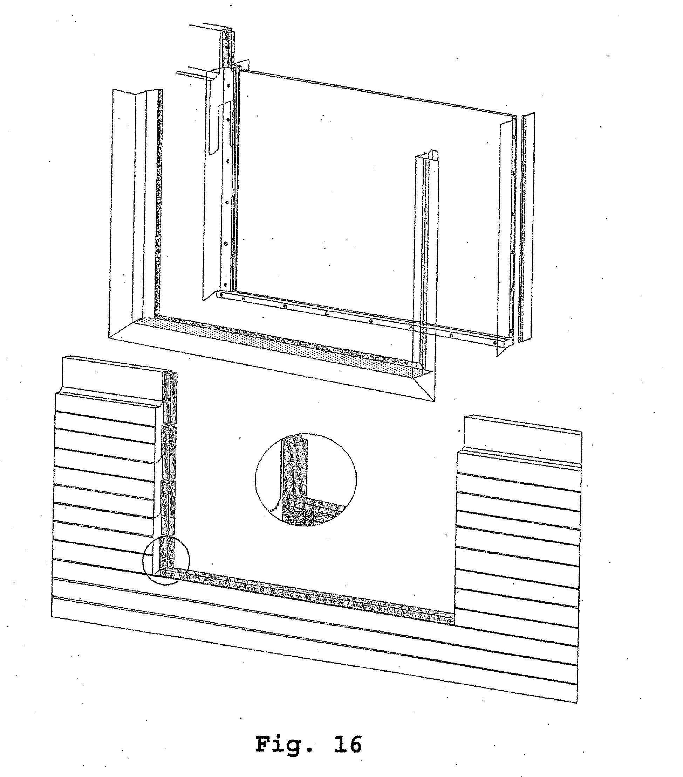

- figure 16 diagrammatically shows a window casing;

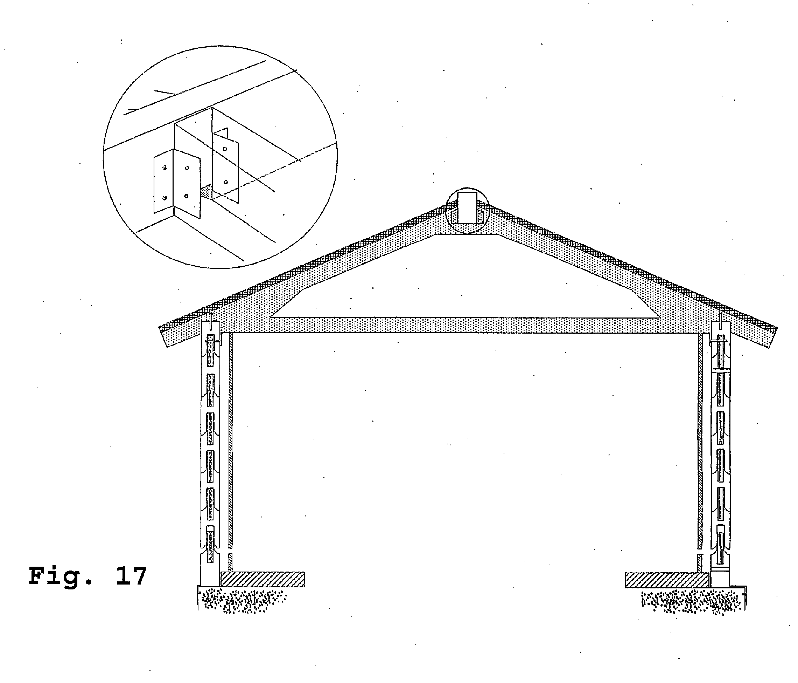

- figure 17 shows a cross-section of a house that is built from building components according to the present invention;

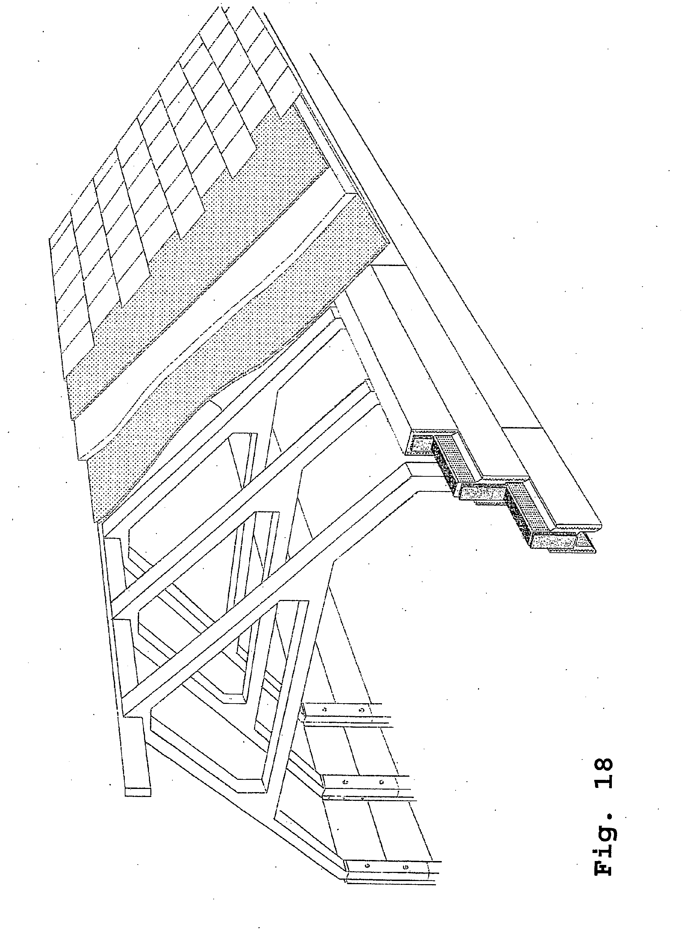

- figure 18 shows a roof construction having building components according to the present invention; and

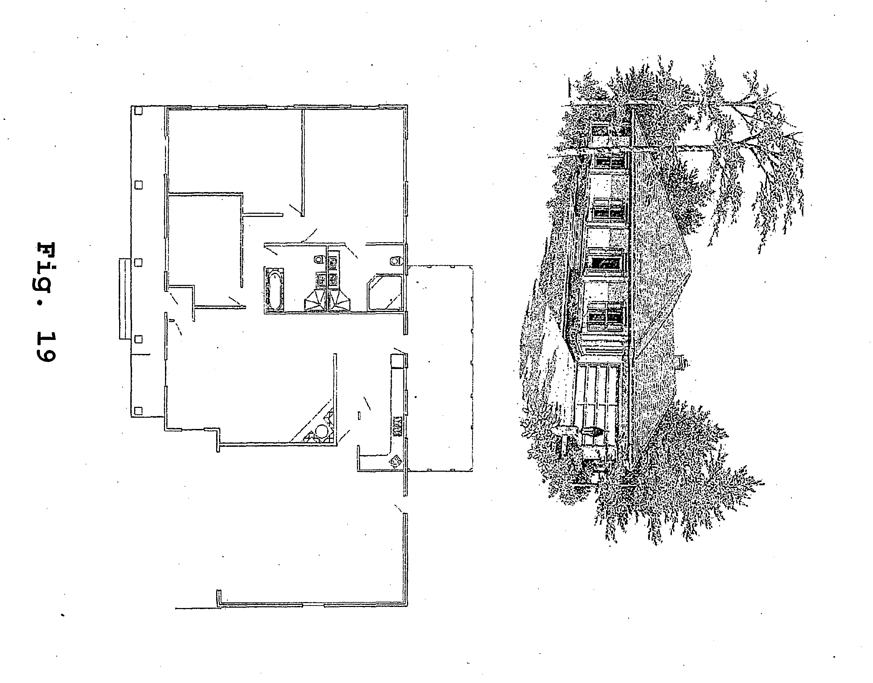

- figure 19 shows a complete house that is built from building components according to the present invention.

It will be clear to a person skilled in the art that the scope of the present invention is not limited to the examples discussed in the foregoing, but that several amendments and modifications thereof are possible without deviating from the scope of the presents invention as defined in the attached claims.

## Claims

1. Method for manufacturing a building component, comprising the following steps:
- cutting small waste such as worn-out tires, scrapped plastic products, obsolete garden furniture, collected litter, packing material and/or polyester waste;
- mixing the small waste particles with a resin such as polyester resin or epoxy resin;
- supplying the mixture of small waste particles and resin to a sleeve of set plate material, wherein a hardening agent is added;
- allowing the mixture in the sleeve to cure;
- positioning the entirety of the cured mixture and the sleeve in a closed vacuum mould in which set plate material is arranged;
- filling the mould with a filler such as polyester resin and/or epoxy resin with quartz powder;
- allowing the material in the mould to cure; and
- releasing the building component thus obtained from the mould.

2. Method according to claim 1, wherein brick grit and/or cement grit is added to the filler,

## Patentansprüche

1. Verfahren zum Herstellen eines Bauteils umfassend die folgenden Schritte:
- Zerschneiden kleineren Abfalls wie abgefahrene Reifen, weggeworfene Kunststoffprodukte, obsolete Gartenmöbel, aufgesammelter Abfall, Packungsmaterial und/oder Polyesterabfall;
- Vermischen der kleinen Abfallpartikel mit einem Harz, wie einem Polyester oder Epoxyharz;
- Einbringen der Mischung der kleinen Abfallpartikel und des Harzes in eine Hülse aus Setzplattenmaterial, in der ein Aushärtmittel zugefügt wird;
- Aushärten der Mischung in der Hülse;
- Positionieren der Gesamtheit aus ausgehärteter Mischung und Hülse in eine geschlossenen Vakuumform, in welcher das Setzplattenmaterial angeordnet ist;
- Auffüllen der Form mit einem Füllstoff, wie einem Polyesterharz und/oder Epoxyharz mit Quarzpulver;
- Aushärten des Materials in der Form und
- Entfernen des so erhaltenen Bauteils aus der Form.

2. Verfahren nach Anspruch 1, in dem Ziegelabrieb und/oder Zementabrieb zu dem Füllstoff hinzugefügt wird.

## Revendications

1. Procédé de fabrication d'un composant de construction, comprenant les étapes consistant à :
- couper des petits déchets comme des pneus usés, des produits en plastique de rebut, des meubles de jardin obsolètes, des détritus collectés, des matériaux d'emballage et/ou des déchets de polyester ;
- mélanger les petites particules de déchets avec une résine comme une résine de polyester ou une résine époxy ;
- introduire le mélange de petites particules de déchets et de résine dans un fourreau de matériau plat de série, dans lequel on ajoute un agent durcisseur ;
- laisser prendre le mélange dans le fourreau ;
- positionner l'intégralité du mélange durci et du fourreau dans un moule sous vide fermé dans lequel est placé un matériau plat de série ;
- remplir le moule d'une charge comme une résine de polyester et/ou une résine époxy avec de la poudre de quartz ;
- laisser durcir le matériau dans le moule ; et
- dégager du moule le composant de construction ainsi obtenu.

2. Procédé selon la revendication 1, dans lequel on ajoute à la charge de la poussière de brique et/ou de la poussière de ciment.
